# FASCICULE DE BREVET EUROPEEN

(11) **EP 0 841 496 B1**
(45) Date de publication et mention de la délivrance du brevet: **26.05.2004**
(21) Numéro de dépôt: 97402508.2
(22) Date de dépôt: 23.10.1997
(51) Int. Cl.: F16D 23/14

(54) **Butée d'ebrayage autocentreuse et procédé de montage**
Selbstzentrierendes Kupplungsausrücklager und Verfahren zur Montage
Self-centering clutch release bearing and method for assembling

(30) Priorité: 07.11.1996 FR 9613609
(43) Date de publication de la demande: 13.05.1998
(73) Titulaire: SKF FRANCE, F-92140 Clamart (FR)
(72) Inventeur: Ponson, Frédéric, 37230 Luynes (FR)
(74) Mandataire: Casalonga, Axel

(56) Documents cités:
- EP-A- 0 247 400
- EP-A- 0 806 581
- DE-A- 3 305 419
- DE-A- 3 329 179
- FR-A- 2 021 663
- FR-A- 2 547 002
- FR-A- 2 611 009
- US-A- 4 815 867

## Description

La présente invention relève du domaine des butées d'embrayage, du type comportant un palier à roulement monté sur un organe de manoeuvre muni d'une partie cylindrique et d'une collerette radiale, ledit organe de manoeuvre étant actionné mécaniquement ou hydrauliquement pour déplacer le roulement axialement de façon que celui-ci agisse par l'intermédiaire de sa bague tournante sur le diaphragme d'un embrayage et assure ainsi sa manoeuvre.

L'invention concerne plus particulièrement les butées d'embrayage dans lesquelles un organe élastique d'auto-alignement est disposé radialement entre la bague non tournante du roulement de butée d'embrayage et l'organe de manoeuvre supportant ledit roulement de butée (voir document FR-2 547 002).

On connaît par la demande de brevet européen n° 0 247 400 (INA Wälzlager Schaeffler) une butée d'embrayage comprenant un roulement et un organe de manoeuvre en matériau synthétique. Le roulement à contact oblique se compose d'une bague tournante et une d'une bague non tournante entre lesquelles sont disposées des billes régulièrement réparties dans le sens circonférentiel par une cage. Les bagues du roulement sont réalisées à partir d'un feuillard de tôle par découpe, emboutissage et traitement thermique. L'organe de manoeuvre supporte le roulement et vient le déplacer axialement contre le diaphragme du mécanisme d'embrayage, sous l'action d'un organe de commande mécanique ou hydraulique. La butée d'embrayage vient en contact avec le diaphragme de l'embrayage par l'intermédiaire d'une surface frontale sensiblement radiale de la bague tournante du roulement et commande ainsi les opérations d'embrayage et de débrayage. Une rondelle d'autocentrage est interposée entre le roulement et l'organe de manoeuvre, assure la liaison entre ces deux éléments et maintient par élasticité axiale, une portion radiale de la bague non tournante du roulement en contact permanent avec une surface radiale de l'organe de manoeuvre.

Comme il existe un jeu radial entre le roulement et l'organe de manoeuvre, le roulement peut ainsi s'autocentrer en fonctionnement sur le diaphragme, ledit autocentrage étant ensuite maintenu par friction entre la portion radiale de la bague non tournante de la butée et la surface radiale d'appui de l'organe de manoeuvre. La rondelle d'autocentrage est de forme biconique à élasticité axiale et réalisée en métal. L'ensemble de la structure de la rondelle participe à la génération de l'effort axial d'appui contre la portion radiale de la bague non tournante du roulement de butée. Ainsi, l'effort axial généré par la rondelle élastique résulte de multiples paramètres dimensionnels et est difficile à maîtriser avec précision.

En outre, ce type de rondelle d'autocentrage comporte souvent des languettes sur la périphérie extérieure ce qui limite les possibilités de réaliser une étanchéité très efficace dans cette zone. Enfin, il est impératif que la portion cylindrique de l'organe de manoeuvre soit pourvu d'un épaulement servant à l'ancrage axial de la rondelle sur l'organe de manoeuvre.

La présente invention a pour objet la réalisation d'une butée d'embrayage comprenant un organe d'auto-alignement élastique de forme simple, peu encombrant, facile à fabriquer et à mettre en place et dans lequel l'effort axial de précontrainte fourni par la rondelle élastique est facile à maîtriser.

Un autre objet de la présente invention est de réaliser une butée d'embrayage dans laquelle l'organe de manoeuvre ne nécessite par de façon impérative des moyens d'ancrage pour l'organe d'auto-alignement.

La butée d'embrayage, selon l'invention, est du type comprenant un palier à roulement muni d'une bague tournante et d'une bague non tournante et monté sur un organe de manoeuvre muni d'une partie cylindrique et d'une collerette radiale sur laquelle vient en appui la bague non tournante du roulement, un organe d'auto-alignement élastique de la bague non tournante par rapport à l'organe de manoeuvre étant monté sur la partie cylindrique de l'organe de manoeuvre et en contact axial avec la bague non tournante. L'organe d'auto-alignement élastique comprend un moyen d'appui axial sur la bague non tournante et un moyen de solidarisation axiale et radiale sur la partie cylindrique de l'organe de manoeuvre, lesdits moyens d'appui et de solidarisation étant séparés l'un de l'autre. On maîtrise ainsi beaucoup plus facilement l'effort axial de précontrainte.

L'organe d'auto-alignement comprend une portion radiale dans laquelle sont prévues des languettes élastiques flexibles axialement *et orientées circonférentiellement* venant en appui contre une portion radiale de la bague non tournante.

L'organe d'auto-alignement peut comprendre un rebord axial s'étendant à partir de l'un des bords de la portion radiale du côté opposé aux languettes élastiques. La portion tubulaire confère la rigidité nécessaire à ladite portion radiale et peut en outre assurer une étanchéité par passage étroit.

Dans un mode de réalisation de l'invention, l'organe d'auto-alignement comprend une couronne de languettes d'accrochage s'étendant radialement à partir de la portion radiale et axialement du côté opposé aux languettes élastiques.

Avantageusement, le diamètre sur les extrémités des languettes d'accrochage, à l'état libre, est conçu pour interférer avec le diamètre de la partie cylindrique de l'organe de manoeuvre, avec laquelle il vient coopérer de façon que, à l'état monté, les languettes d'accrochage soient en précontrainte radiale sur la partie cylindrique, pour empêcher par effet d'arc-boutement, tout mouvement axial de l'organe d'auto-alignement en direction opposée à celle de la bague non tournante. Les languettes d'accrochage peuvent s'étendre vers l'intérieur ou vers l'extérieur à partir de la portion radiale pour coopérer avec une portion cylindrique correspondant de l'organe de manoeuvre.

Dans un mode de réalisation de l'invention, l'organe d'auto-alignement comprend une lèvre d'étanchéité venant en contact frottant avec la bague tournante ou un rebord axial formant une étanchéité par passage étroit.

Les languettes élastiques sont orientées dans le sens circonférentiel. Elles peuvent également être disposées sur l'un des bords, intérieur ou extérieur, de la portion radiale de l'organe d'auto-alignement.

Dans un mode de réalisation de l'invention, après montage, la portion radiale de l'organe d'auto-alignement est en contact avec la portion radiale de la bague non tournante.

Dans un autre mode de réalisation de l'invention, après montage, les languettes élastiques font saillie axialement de la portion radiale de l'organe d'auto-alignement, en direction de la portion radiale de la bague non tournante sur laquelle elles viennent en appui. *La position définitive de l'organe d'auto-alignement peut être déterminée par le montage.*

L'invention a également pour objet un procédé de montage d'une butée d'embrayage, comprenant les étapes suivantes :
- assemblage d'un sous-ensemble comprenant un palier à roulement muni d'une bague tournante et d'une bague non tournante et un organe d'auto-alignement élastique disposé entre une portion radiale de la bague tournante et une portion radiale de la bague non tournante et comprenant un moyen d'appui axial sur la bague non tournante *sous la forme de languettes orientées circonférentiellement* et un moyen de solidarisation axiale et radiale sur un organe de manoeuvre muni d'une partie cylindrique et d'une collerette radiale,
- montage du sous-ensemble sur l'organe de manoeuvre par un mouvement axial en appuyant sur la bague tournante, la bague non tournante venant en appui sur la collerette radiale de l'organe de manoeuvre,
- mise en place de l'organe d'auto-alignement élastique par appui axial au moyen d'un outil passant autour de la partie cylindrique de l'organe de manoeuvre, l'organe d'auto-alignement élastique venant d'une part en appui contre la portion radiale de la bague non tournante *par lesdites languettes* et d'autre part s'accrocher sur la partie cylindrique de l'organe de manoeuvre. Le déplacement de l'outil peut être limité par un épaulement dudit outil venant en contact contre l'extrémité libre de l'organe de manoeuvre. Le déplacement de l'outil peut également être limité par l'organe d'auto-alignement élastique et la portion radiale de la bague non tournante.

On peut utiliser un organe de manoeuvre dont la portion cylindrique est dépourvue de protubérance ou d'épaulement en saillie radialement vers l'extérieur. On simplifie ainsi la fabrication dudit organe de manoeuvre.

L'invention sera mieux comprise à l'étude de la description détaillée de quelques modes de réalisation pris à titre d'exemples nullement limitatifs et illustrés par les dessins annexés sur lesquels :
la figure 1 est une vue en coupe axiale d'une butée d'embrayage selon un premier mode de réalisation de l'invention;

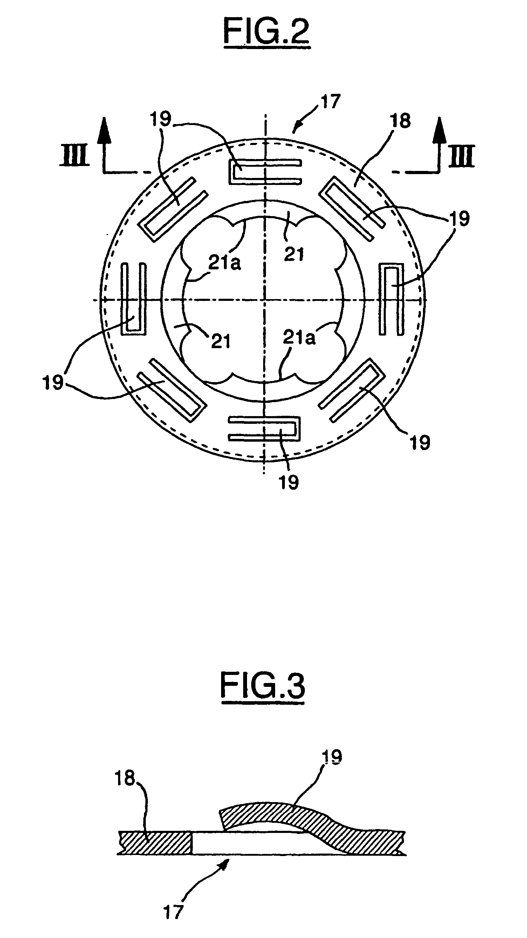

la figure 2 est une vue de face en élévation de l'organe d'auto-alignement de la figure 1;
la figure 3 est une vue de détail en coupe selon III-III de la figure 2;
les figures 4, 5 et 6 sont des vues en demi-coupe axiale montrant les étapes du montage de la butée d'embrayage selon l'invention;
la figure 7 est une vue en demi-coupe axiale montrant la dernière étape de montage d'une butée d'embrayage selon un autre mode de réalisation de l'invention;
la figure 8 est une vue de face en élévation d'un organe d'auto-alignement selon un autre mode de réalisation de l'invention;
la figure 9 est une vue en coupe selon IX-IX de la figure 8;
la figure 10 est une vue en demi-coupe axiale d'une butée d'embrayage selon un autre mode de réalisation de l'invention.

Telle qu'elle est illustrée, la butée d'embrayage conforme à l'invention, comprend un palier à roulement 1 monté sur un organe de manoeuvre 2, avantageusement réalisé en matière synthétique et qui comporte une partie cylindrique 3 et une collerette radiale 4. Le palier à roulement 1 comporte une bague intérieure de roulement 5 à paroi mince réalisée par emboutissage d'une tôle ou d'un tube et présentant un chemin torique 6 pour une rangée de billes 7 maintenues dans une cage 8. La bague intérieure 5 comporte également une prolongation dirigée vers l'extérieur sous la forme d'une portion radiale 9 et une prolongation dirigée vers l'intérieur sous la forme d'une portion radiale 10 qui vient en contact avec la surface frontale 4a de la collerette radiale 4.

Le palier à roulement 1 se complète par une bague extérieure 11 également à paroi mince réalisée par emboutissage d'une tôle ou d'un tube qui présente un chemin de roulement torique 12 pour les billes 7 ainsi qu'une portion radiale 13 qui vient en contact avec la surface du diaphragme 14 d'un dispositif d'embrayage lors du déplacement axial de l'ensemble de la butée supportée par l'organe de manoeuvre 2. Le palier à roulement 1 est protégé du côté du diaphragme 14 par un flasque de protection 15 fixé sur la bague extérieure 11, et du côté opposé au diaphragme 14 par un flasque de protection 16 également fixé sur la bague extérieure 11.

La collerette radiale 4 est de faible dimension radiale de façon que, tout en étant en contact avec la portion radiale 10 de la bague intérieure 5, elle soit entourée radialement par ladite bague intérieure 5 et se situe sensiblement dans le même plan radial que les billes 7. La butée d'embrayage ainsi obtenue est très compacte axialement, sa longueur axiale étant égale à celle du palier à roulement 1.

Un organe d'auto-alignement élastique et de retenue axiale de la bague non tournante 5 par rapport à l'organe de manoeuvre 2, référencé 17 dans son ensemble, est disposé autour de la partie cylindrique 3 de l'organe de manoeuvre 2 et axialement entre la portion radiale 10 de la bague intérieure 5 et la portion radiale 13 de la bague extérieure 11. L'organe d'auto-alignement 17 est annulaire et comprend une portion radiale 18 à partir de laquelle sont issues par découpe une pluralité de languettes élastiques 19 disposées dans le sens circonférentiel, flexibles axialement et venant en appui sur la portion radiale 10 de la bague intérieure 5. Les languettes élastiques 19 sont recourbées de façon à présenter une surface convexe de contact avec la bague intérieure 5 et éviter toute usure excessive au niveau de ce contact. A titre de variante, on peut prévoir des languettes élastiques orientées radialement.

L'organe d'auto-alignement 17 comprend une portion tubulaire 20 qui s'étend à partir de la périphérie de la portion radiale 18 en direction de la portion radiale 13 de la bague extérieure 11. On peut prévoir un rebord axial 20 de longueur telle qu'elle forme un passage étroit avec la bague extérieure 11. Le rebord axial 20 confère une bonne rigidité axiale à la portion radiale 18.

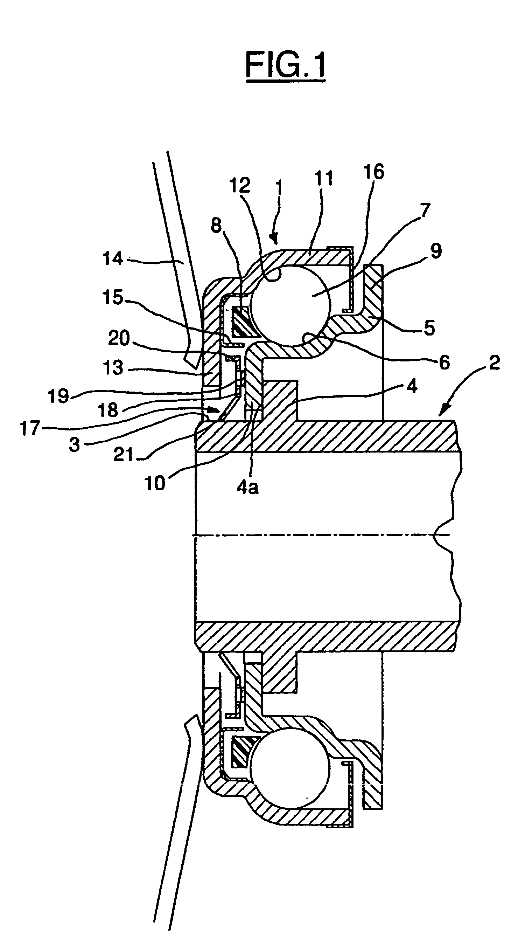

L'organe d'auto-alignement 17 comprend quatre languettes d'accrochage 21 s'étendant à partir du petit diamètre de la portion radiale 18, radialement vers l'intérieur et axialement en direction du diaphragme 14 et exerçant une précontrainte radiale sur la partie cylindrique 3. Comme on peut le voir sur la figure 1, ces languettes d'accrochage 21 forment, après montage, un angle relativement faible par rapport à un plan radial et empêchent donc tout mouvement de la bague intérieure 5 en direction du diaphragme 14 par un effet d'arc-boutement entre la partie cylindrique 3 et la portion radiale 18. Pour accroître la stabilité des languettes d'accrochage 21, on prévoit que leur bord interne 21a qui est en contact avec la partie cylindrique 3 est circulaire de façon à s'adapter parfaitement au contour de ladite partie cylindrique 3. Dans ce même but, on prévoit des languettes d'accrochage 21 occupant un secteur angulaire suffisant, par exemple 1/8 de tour. L'organe d'auto-alignement 17 est solidaire de l'organe de manoeuvre 2, radialement et axialement au moins dans le sens du démontage grâce aux languettes d'accrochage 21.

En fonctionnement, si les axes de rotation du diaphragme et du roulement ne sont pas initialement exactement confondus, le palier à roulement 1 peut s'auto-aligner sur le diaphragme en se déplaçant radialement par rapport à l'organe de manoeuvre 2 dans la limite du jeu existant entre l'extrémité libre de la portion radiale 10 de la bague intérieure 5 et la partie cylindrique 3. L'organe d'auto-alignement 17 exerce un effort axial de précontrainte constant sur la bague intérieure 5 au moyen des languettes élastiques 19. Tout effort axial exercé sur l'organe d'auto-alignement 17 dans la direction opposée à la collerette radiale 4 et à la bague intérieure 5 tend à provoquer l'arc-boutement des languettes d'accrochage 21 entre la partie cylindrique 3 et la portion radiale 18 qui ne peut se déformer radialement, interdisant ainsi tout déplacement axial de l'organe d'auto-alignement dans cette direction. Les contraintes qui en résultent sont donc reprises par ladite portion radiale 18 et restent sans influence sur les languettes élastiques 19. Inversement, les languettes d'accrochage 21 ne sont pas déformées par les contraintes exercées par les languettes élastique 19 qui sont reprises par la portion radiale 18 et le rebord axial 20. Il n'y a donc pas d'interactions entre les languettes d'accrochage 21 et les languettes élastiques 19 et la position axiale de l'organe d'auto-alignement 17 par rapport à l'organe de manoeuvre 2 permet donc de déterminer précisément la précontrainte exercée par les languettes élastiques 19.

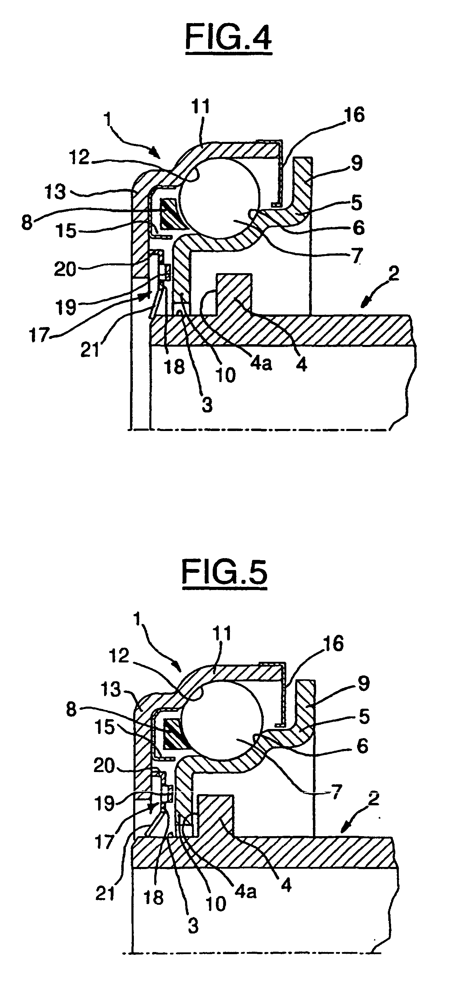

Sur la figure 4, on voit la butée d'embrayage au début de son montage. On a tout d'abord procédé à l'assemblage du palier à roulement 1, entre les bagues intérieure 5 et extérieure 11 duquel a été disposé l'organe d'auto-alignement 17 que l'on voit dans sa position non déformée, à l'état libre. Les languettes d'accrochage 21 forment un angle extrêmement faible avec un plan radial, par exemple de l'ordre de 10 à 20°. Puis, comme on le voit sur la figure 5, on déplace axialement le palier à roulement 1 en direction de l'organe de manoeuvre 2 ce qui provoque le contact entre le bord 21a des languettes d'accrochage 21 et l'extrémité de la partie cylindrique 3 de l'organe de manoeuvre 2 et la rétraction des languettes d'accrochage 21 dans la direction opposée à celle de l'organe de manoeuvre 2, puis le contact entre la portion tubulaire 10 de la bague intérieure 5 et la collerette radiale 4 de l'organe de manoeuvre 2.

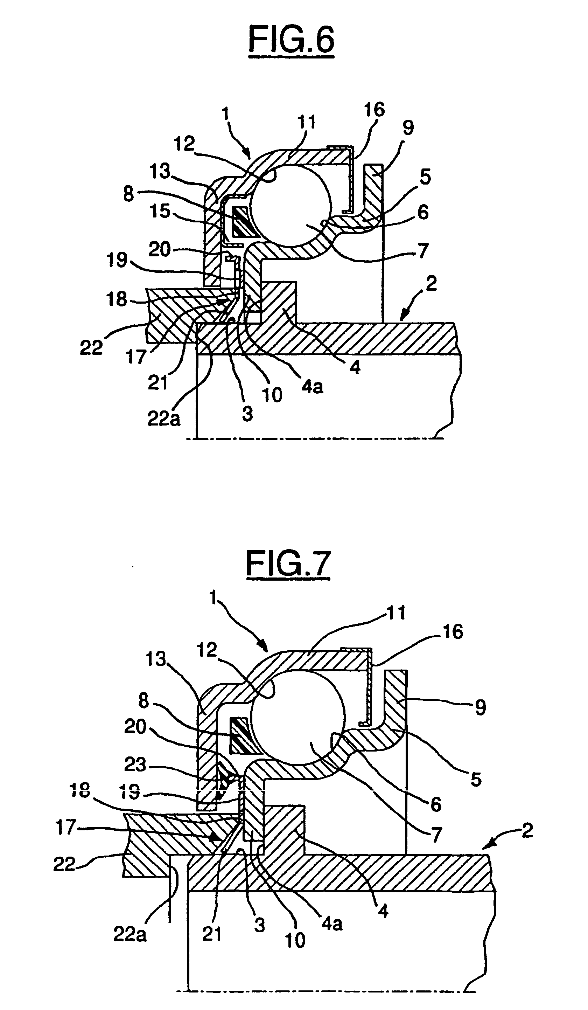

Comme on le voit sur la figure 6, on amène alors un outil 22 dont au moins une partie est capable de passer dans l'espace annulaire entre la partie cylindrique 3 de l'organe de manoeuvre 2 et la portion radiale 13 de la bague extérieure 11 et vient appuyer sur la portion radiale 18 de l'organe d'auto-alignement 17 jusqu'à la position définitive de ce dernier. Sur la figure 6 la position définitive de l'organe d'auto-alignement 17 est déterminée par un épaulement 22a de l'outil 22 qui entre en contact avec l'extrémité de la partie cylindrique 3 de l'organe de manoeuvre 2. On dispose ainsi l'organe d'auto-alignement 17 dans une position déterminée compte-tenu de l'épaisseur de la portion radiale 10 de la bague intérieure 5, de la distance entre la surface frontale 4a de la collerette radiale 4 et l'extrémité libre de la partie cylindrique 3 de l'organe de manoeuvre 2 et enfin de la distance entre l'épaulement 22a de l'outil 22 et l'extrémité de ce dernier.

La butée d'embrayage illustrée sur la figure 7 est semblable à celle de la figure 1 à ceci près que le flasque de protection 15 est remplacé par un joint d'étanchéité 23 surmoulé sur l'extrémité libre de la portion tubulaire 20 de l'organe d'auto-alignement 17.

L'outil 22 est pourvu d'un épaulement 22a prévu pour ne pas entrer en contact avec la partie cylindrique 3 de l'organe de manoeuvre 2. L'outil 22 vient enfoncer l'organe d'auto-alignement 17 jusqu'à ce que la portion radiale 18 soit en contact avec la portion radiale 10 de la bague intérieure 5, les languettes élastiques 19 étant totalement effacées tout en exerçant une contrainte élastique sur la bague intérieure 5. Une fois l'organe d'auto-alignement 17 monté sur la partie cylindrique 3 de l'organe de manoeuvre 2, les languettes d'accrochage 21 s'arc-boutent en cas de tentative de démontage dudit organe d'auto-alignement 17 et empêchent donc tout mouvement de l'organe d'auto-alignement 17 en direction du diaphragme 14.

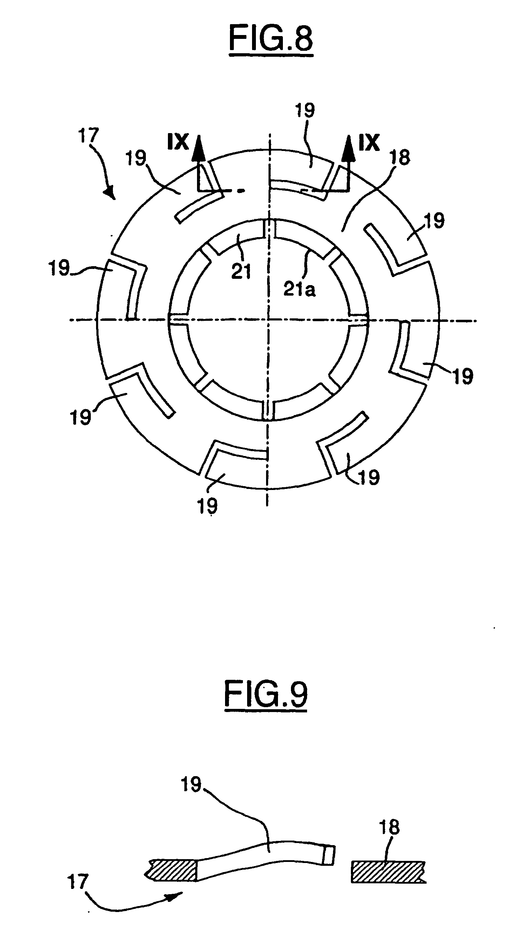

L'organe d'auto-alignement 17, illustré sur les figures 8 et 9, est pourvu de languettes 19 disposées sur la périphérie de la portion radiale 18, dans le sens circonférentiel, radialement à l'opposé des languettes d'accrochage 21. Les languettes 19 sont de forme recourbée, bombée vers la bague non tournante. Leur fabrication par des procédés conventionnels de découpe et formage à la presse est particulièrement aisée.

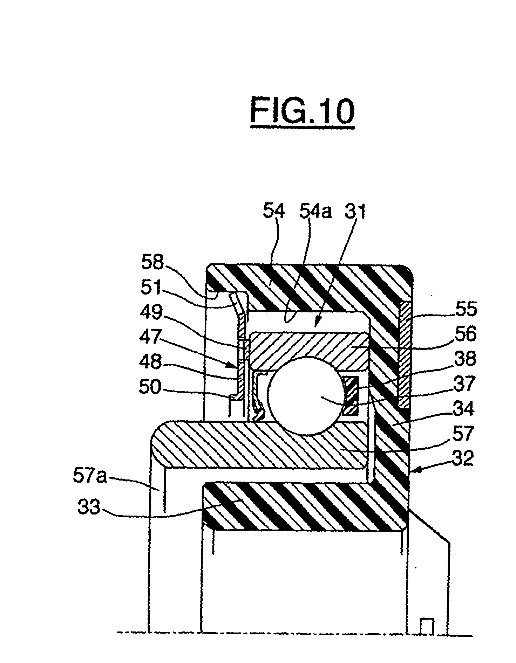

Sur la figure 10, les références des éléments semblables à ceux des figures précédentes ont été augmentées du nombre 30.

L'organe de manoeuvre 32 comprend une partie cylindrique 54 qui se raccorde à la collerette radiale 34 à la périphérie de cette dernière. Une plaque anti-usure 55 destinée à coopérer avec des doigts d'un organe de commande non représenté, est fixée à la collerette radiale 34 du côté opposé au palier à roulement 31.

Le palier à roulement 31 comprend une bague extérieure massive non tournante 56 et une bague intérieure massive tournante 57 possédant une prolongation axiale 57a d'extrémité bombée pour le contact avec le diaphragme non représenté. La bague extérieure 56 est maintenue contre la collerette radiale 34 grâce à un organe d'auto-alignement 47.

L'organe d'auto-alignement 47 comprend un rebord axial 50 à proximité de la bague intérieure 57, une portion radiale 48 s'étendant vers l'extérieur à partir du rebord axial 50 et comprenant des languettes élastiques 49 agissant axialement sur la bague extérieure 56, et des languettes d'accrochage 51 disposées sur la périphérie de la portion radiale 48 et orientées radialement vers l'extérieur et axialement à l'opposé de la bague extérieure 56 pour venir en contact avec une portée cylindrique intérieure 58 formée sur l'alésage 54a de la partie cylindrique 54.

Comme dans les modes de réalisation précédents, les languettes d'accrochage 51 forment un dispositif auto-bloquant sur l'organe de manoeuvre interdisant tout déplacement axial de l'organe d'auto-alignement 47 dans une direction opposée à la collerette radiale 34 et à la bague non tournante 56.

Le palier à roulement 31 peut ainsi s'auto-centrer radialement par rapport à l'organe de manoeuvre 32 tout en étant mis en appui par l'organe d'auto-alignement 47 contre la collerette radiale 34.

Bien que la butée d'embrayage suivant l'invention soit conçue pour fonctionner avec un organe de manoeuvre dont la portion cylindrique ne comporte aucun moyen d'ancrage pour l'organe d'auto-alignement, il va de soi qu'une butée suivant l'invention peut parfaitement s'accommoder d'un organe de manoeuvre possédant des moyens d'ancrage tels que des ergots radiaux ou un épaulement.

Ceci permet par exemple d'utiliser une butée suivant l'invention sur un organe de manoeuvre conventionnel sans avoir à modifier la conception de ce dernier.

Grâce à l'invention, on obtient un organe d'auto-alignement dont les fonctions d'accrochage et d'appui axial sont dissociées ce qui permet de monter l'organe d'auto-alignement de façon à obtenir une précontrainte axiale précise de la bague non tournante du roulement contre la collerette radiale de l'organe de manoeuvre. Le montage de l'organe d'auto-alignement sur l'organe de manoeuvre est facile à effectuer et son immobilisation et son indémontabilité axiale sont assurées par l'effet d'arc-boutement des languettes d'accrochage entre la portion cylindrique de l'organe de manoeuvre et la portion radiale de l'organe d'auto-alignement.

## Revendications

1. Butée d'embrayage du type comprenant un palier à roulement (1) muni d'une bague tournante (11) et d'une bague non tournante (5) et monté sur un organe de manoeuvre (2) muni d'une partie cylindrique (3, 54) et d'une collerette radiale (4) sur laquelle vient en appui la bague non tournante du roulement, un organe d'auto-alignement élastique (17) de la bague non tournante par rapport à l'organe de manoeuvre étant monté sur la partie cylindrique de l'organe de manoeuvre et en contact axial avec la bague non tournante, l'organe d'auto-alignement élastique comprenant un moyen d'appui axial sur la bague non tournante et un moyen de solidarisation axiale et radiale sur la partie cylindrique de l'organe de manoeuvre, **caractérisée par le fait que** lesdits moyens d'appui et de solidarisation sont séparés l'un de l'autre, l'organe d'auto-alignement comprenant une portion radiale (18) dans laquelle sont prévues des languettes élastiques (19) flexibles axialement *et orientées circonférentiellement,* venant en appui contre une portion radiale (10) de la bague non tournante.

2. Butée d'embrayage selon la revendication 1, **caractérisée par le fait que** l'organe d'auto-alignement comprend un rebord axial (20) s'étendant à partir de l'un des bords de la portion radiale du côté opposé aux languettes élastiques.

3. Butée d'embrayage selon la revendication 1 ou 2, **caractérisée par le fait que** l'organe d'auto-alignement comprend une couronne de languettes d'accrochage (21) s'étendant radialement à partir de l'un des bords de la portion radiale et axialement du côté opposé aux languettes élastiques (19).

4. Butée d'embrayage selon la revendication 3, **caractérisée par le fait que** le diamètre sur les extrémités des languettes d'accrochage (21, 51) à l'état libre est conçu pour interférer avec la partie cylindrique (3, 54) de l'organe de manoeuvre avec laquelle il vient coopérer, de façon que, à l'état monté, les languettes d'accrochage soient en précontrainte radiale sur la partie cylindrique pour empêcher, par effet d'arc-boutement, tout mouvement axial de l'organe d'auto-alignement en direction opposée à celle de la bague non tournante.

5. Butée d'embrayage selon la revendication 4, **caractérisée par le fait que** les languettes d'accrochage (21) sont dirigées radialement vers l'intérieur.

6. Butée d'embrayage selon la revendication 4, **caractérisée par le fait que** les languettes d'accrochage (51) sont dirigées radialement vers l'extérieur.

7. Butée d'embrayage selon l'une quelconque des revendications précédentes, **caractérisée par le fait que** l'organe d'auto-alignement comprend une lèvre d'étanchéité (23) venant en contact frottant avec la bague tournante.

8. Butée d'embrayage selon la revendication 5 ou 6, **caractérisée par le fait que** le rebord axial forme une étanchéité par passage étroit avec la bague tournante.

9. Butée d'embrayage selon l'une quelconque des revendications précédentes, **caractérisée par le fait que** les languettes élastiques sont disposées sur l'un des bords de la portion radiale.

10. Butée d'embrayage selon l'une quelconque des revendications 1 à 9, **caractérisée par le fait qu'**après montage, la portion radiale (18) de l'organe d'auto-alignement est en contact avec la portion radiale (10) de la bague non tournante.

11. Butée d'embrayage selon l'une quelconque des revendications 1 à 9, **caractérisée par le fait qu'**après montage, les languettes élastiques (19) font saillie axialement de la portion radiale de l'organe d'auto-alignement, en direction de la portion radiale de la bague non tournante.

12. *Butée d'embrayage selon l'une quelconque des revendications précédentes, **caractérisée par le fait que** la position définitive de l'organe d'auto-alignement est déterminée par le montage*

13. Procédé de montage d'une butée d'embrayage, comprenant les étapes suivantes :.
- assemblage d'un sous-ensemble comprenant un palier à roulement muni d'une bague tournante et d'une bague non-tournante et un organe d'auto-alignement élastique disposé entre une portion radiale de la bague tournante et une portion radiale de la bague non tournante et comprenant un moyen d'appui axial sur la bague non tournante *sous la forme de languettes orientées circonférentiellement* et un moyen de solidarisation axiale et radiale sur un organe de manoeuvre muni d'une partie cylindrique et d'une collerette radiale,
- montage du sous-ensemble sur l'organe de manoeuvre par un mouvement axial en appuyant sur la bague tournante, la bague non tournante venant en appui sur la collerette radiale de l'organe de manoeuvre;
- mise en place de l'organe d'auto-alignement élastique par appui axial au moyen d'un outil passant autour de la partie cylindrique de l'organe de manoeuvre, l'organe d'auto-alignement élastique venant d'une part en appui contre la portion radiale de la bague non tournante *par lesdites languettes* et d'autre part s'accrocher sur la partie cylindrique de l'organe de manoeuvre.

14. Procédé selon la revendication *13*, **caractérisé par le fait que** le déplacement de l'outil est limité par un épaulement dudit outil venant en contact contre l'extrémité libre de l'organe de manoeuvre.

15. Procédé selon la revendication *13*, **caractérisé par le fait que** le déplacement de l'outil est limité par l'organe d'auto-alignement élastique et la portion radiale de la bague non tournante.

16. *Procédé selon l'une quelconque des revendications 13 à 15, **caractérisé par le fait que** la position définitive de l'organe d'auto-alignement est déterminée par ledit outil.*

## Patentansprüche

1. Kupplungsausrücklager jener Art, die ein Wälzlager (1) umfasst, das mit einem drehbaren Ring (11) und einem drehfixierten Ring (5) versehen und an einem Betätigungsglied (2) angebracht ist, das mit einem zylindrischen Teil (3, 54) und einem radialen Flansch (4) versehen ist, an dem der drehfixierte Ring des Wälzlagers zur Anlage kommt, wobei ein elastisches Glied (17) zur Selbstausrichtung des drehfixierten Rings bezüglich des Betätigungsglieds an dem zylindrischen Teil des Betätigungsglieds angebracht ist und in axialem Kontakt mit dem drehfixierten Ring steht, wobei das elastische Selbstausrichtungsglied ein Mittel zur axialen Anlage an dem drehfixierten Ring und ein Mittel zur axialen und radialen Befestigung an dem zylindrischen Teil des Betätigungsglieds umfasst, **dadurch gekennzeichnet, dass** das Anlageund das Befestigungsmittel voneinander getrennt sind, wobei das Selbstausrichtungsglied einen radialen Teil (18) aufweist, in dem elastische Laschen (19) vorgesehen sind, die axial flexibel und um den Umfang ausgerichtet sind und an einem radialen Teil (10) des drehfixierten Rings zur Anlage kommen.

2. Kupplungsausrücklager nach Anspruch 1, **dadurch gekennzeichnet, dass** das Selbstausrichtungsglied einen axialen vorstehenden Rand (20) umfasst, der sich von einem der Ränder des radialen Teils auf der den elastischen Laschen gegenüberliegenden Seite erstreckt.

3. Kupplungsausrücklager nach Anspruch 1 oder 2, **dadurch gekennzeichnet, dass** das Selbstausrichtungsglied einen Kranz mit Befestigungslaschen (21) umfasst, die sich von einem der Ränder des radialen Teils radial und auf der den elastischen Laschen (19) gegenüberliegenden Seite axial erstrecken.

4. Kupplungsausrücklager nach Anspruch 3, **dadurch gekennzeichnet, dass** der Durchmesser an den Enden der Befestigungslaschen (21, 51) so konzipiert ist, dass er im freien Zustand auf den zylindrischen Teil (3, 54) des Betätigungsglieds einwirkt, mit dem er zusammenwirkt, so dass, im montierten Zustand, die Befestigungslaschen an dem zylindrischen Teil radial vorbelastet sind, um durch eine Verstrebungswirkung jegliche Axialbewegung des Selbstausrichtungsglieds in die der Richtung des drehfixierten Rings entgegengesetzte Richtung zu verhindern.

5. Kupplungsausrücklager nach Anspruch 4, **dadurch gekennzeichnet, dass** die Befestigungslaschen (21) radial nach innen gerichtet sind.

6. Kupplungsausrücklager nach Anspruch 4, **dadurch gekennzeichnet, dass** die Befestigungslaschen (51) radial nach außen gerichtet sind.

7. Kupplungsausrücklager nach einem der vorhergehenden Ansprüche, **dadurch gekennzeichnet, dass** das Selbstausrichtungsglied eine Dichtlippe (23) umfasst, die mit dem drehbaren Ring in Reibkontakt kommt.

8. Kupplungsausrücklager nach Anspruch 5 oder 6, **dadurch gekennzeichnet, dass** der axiale vorstehende Rand durch enge Passung mit dem drehbaren Ring Dichtigkeit gewährleistet.

9. Kupplungsausrücklager nach einem der vorhergehenden Ansprüche, **dadurch gekennzeichnet, dass** die elastischen Laschen an einem der Ränder des radialen Teils angeordnet sind.

10. Kupplungsausrücklager nach einem der Ansprüche 1 bis 9, **dadurch gekennzeichnet, dass** nach der Montage der radiale Teil (18) des Selbstausrichtungsglieds mit dem radialen Teil (10) des drehfixierten Rings in Kontakt steht.

11. Kupplungsausrücklager nach einem der Ansprüche 1 bis 9, **dadurch gekennzeichnet, dass** nach der Montage die elastischen Laschen (19) axial von dem radialen Teil des Selbstausrichtungsglieds in Richtung des radialen Teils des drehfixierten Rings vorstehen.

12. Kupplungsausrücklager nach einem der vorhergehenden Ansprüche, **dadurch gekennzeichnet, dass** die Endposition des Selbstausrichtungsglieds durch die Montage bestimmt wird.

13. Verfahren zur Montage eines Kupplungsausrücklagers, bei dem man:
- eine ein mit einem drehbaren Ring und einem drehfixierten Ring versehenes Wälzlager enthaltende Untergruppe und ein zwischen einem radialen Teil des drehbaren Rings und einem radialen Teil des drehfixierten Rings angeordnetes elastisches Selbstausrichtungsglied, das ein in Form von um den Umfang ausgerichteten Laschen vorliegendes Mittel zur axialen Anlage an dem drehfixierten Ring und ein Mittel zur axialen und radialen Befestigung an einem mit einem zylindrischen Teil und einem radialen Flansch versehenen Betätigungsglied umfasst, zusammenbaut,
- die Untergruppe mit Hilfe einer Axialbewegung durch Drücken gegen den drehbaren Ring an das Betätigungsglied montiert, wobei der drehfixierte Ring an dem radialen Flansch des Betätigungsglieds zur Anlage kommt,
- das elastische Selbstausrichtungsglied durch axiales Drücken mittels eines sich um den zylindrischen Teil des Betätigungsglieds herum erstreckenden Werkzeugs einführt, wobei das elastische Selbstausrichtungsglied einerseits durch die Laschen an dem radialen Teil des drehfixierten Rings zur Anlage kommt und andererseits an dem zylindrischen Teil des Betätigungsglieds befestigt wird.

14. Verfahren nach Anspruch 13, **dadurch gekennzeichnet, dass** die Bewegung des Werkzeugs begrenzt wird, indem eine Schulter des Werkzeugs mit dem freien Ende des Betätigungsglieds in Kontakt kommt.

15. Verfahren nach Anspruch 13, **dadurch gekennzeichnet, dass** die Bewegung des Werkzeugs durch das elastische Selbstausrichtungsglied und den radialen Teil des drehfixierten Rings begrenzt wird.

16. Verfahren nach einem der Ansprüche 13 bis 15, **dadurch gekennzeichnet, dass** die Endposition des Selbstausrichtungsglieds durch das Werkzeug bestimmt wird.

## Claims

1. Clutch-release bearing of the type comprising a rolling bearing (1) which has a rotating race (11) and a non-rotating race (5) and is mounted on an operating member (2) which has a cylindrical part (3, 54) and a radial flange (4) against which the non-rotating race of the bearing bears, an elastic member (17) for the self-alignment of the non-rotating race with respect to the operating member being mounted on the cylindrical part of the operating member and in axial contact with the non-rotating race, the elastic self-alignment member comprising a means for bearing axially against the non-rotating race and a means for axial and radial securing to the cylindrical part of the operating member, **characterized in that** the said bearing and securing means are separate from one another, the self-alignment member comprising a radial portion (18) in which there are axially flexible and circumferentially directed elastic tabs (19) which bear against a radial portion (10) of the non-rotating race.

2. Clutch-release bearing according to Claim 1, **characterized in that** the self-alignment member comprises an axial rim (20) extending from one of the edges of the radial portion on the opposite side to the elastic tabs.

3. Clutch-release bearing according to Claim 1 or 2, **characterized in that** the self-alignment member comprises a ring of catching tabs (21) extending radially from one of the edges of the radial portion and axially on the opposite side to the elastic tabs (19).

4. Clutch-release bearing according to Claim 3, **characterized in that** the diameter accross the ends of the catching tabs (21, 51) in the free state is designed to interfere with the cylindrical part (3, 54) of the operating member with which it interacts, so that in the fitted state the catching tabs are radially prestressed on the cylindrical part so that, by a bracing effect, any axial movement of the self-alignment member in the direction away from the non-rotating race is prevented.

5. Clutch-release bearing according to Claim 4, **characterized in that** the catching tabs (21) point radially inwards.

6. Clutch-release bearing according to Claim 4, **characterized in that** the catching tabs (51) point radially outwards.

7. Clutch-release bearing according to any one of the preceding claims, **characterized in that** the self-alignment member comprises a sealing lip (23) which comes into rubbing contact with the rotating race.

8. Clutch-release bearing according to Claim 5 or 6, **characterized in that** the axial rim forms a seal by fitting closely with the rotating race.

9. Clutch-release bearing according to any one of the preceding claims, **characterized in that** the elastic tabs are arranged on one of the edges of the radial portion.

10. Clutch-release bearing according to any one of Claims 1 to 9, **characterized in that** after fitting, the radial portion (18) of the self-alignment member is in contact with the radial portion (10) of the non-rotating race.

11. Clutch-release bearing according to any one of Claims 1 to 9, **characterized in that** after fitting, the elastic tabs (19) project axially from the radial portion of the self-alignment member towards the radial portion of the non-rotating race.

12. Clutch-release bearing according to any of the preceding claims, **characterized in that** the final position of the self-alignment member is determined by the fitting situation.

13. Method for fitting a clutch-release bearing, comprising the following steps:
- assembling a subassembly that comprises a rolling bearing which has a rotating race and a non-rotating race and an elastic self-alignment member arranged between a radial portion of the rotating race and a radial portion of the non-rotating race and comprising a means for bearing axially on the non-rotating race in the form of circumferentially directed tabs and a means for axial and radial securing to an operating member which has a cylindrical part and a radial flange,
- fitting the subassembly on the operating member using an axial movement by pressing on the rotating race, the non-rotating race coming to bear on the radial flange of the operating member,
- introducing the elastic self-alignment member by pressing axially using a tool that passes around the cylindrical part of the operating member, the elastic self-alignment member on the one hand coming to bear against the radial portion of the non-rotating race by the said tabs and on the other hand becoming caught on the cylindrical part of the operating member.

14. Method according to Claim 13, **characterized in that** the movement of the tool is limited by a shoulder of the said tool coming into contact with the free end of the operating member.

15. Method according to Claim 13, **characterized in that** the movement of the tool is limited by the elastic self-alignment member and the radial portion of the non-rotating race.

16. Method according to any one of Claims 13 to 15, **characterized in that** the final position of the self-alignment member is determined by the said tool.
